# EUROPÄISCHE PATENTSCHRIFT

(11) **EP 2 725 208 B1**
(45) Veröffentlichungstag und Bekanntmachung des Hinweises auf die Patenterteilung: **28.02.2018**
(21) Anmeldenummer: 13187331.7
(22) Anmeldetag: 04.10.2013
(51) Int. Cl.: F01L 13/00, F01L 1/047

(54) **Mehrfachnocken**
Multiple cams
Came multiple

(30) Priorität: 24.10.2012 DE 102012219453
(43) Veröffentlichungstag der Anmeldung: 30.04.2014
(73) Patentinhaber: MAHLE International GmbH, 70376 Stuttgart (DE)
(72) Erfinder: Kaiser, Roland, 50735 Köln-Niehl (DE); Kreisig, Michael, 70197 Stuttgart (DE); Lettmann, Markus, 75249 Kieselbronn (DE); Schneider, Falk, 70825 Korntal-Münchingen (DE); Krepulat, Walter, 70563 STUTTGART (DE)
(74) Vertreter: BRP Renaud & Partner mbB Rechtsanwälte Patentanwälte Steuerberater

(56) Entgegenhaltungen:
- DE-A1- 10 311 358
- DE-A1-102006 008 532
- DE-A1-102007 043 169
- DE-A1-102009 053 046
- DE-B3-102004 009 074
- GB-A- 2 385 888
- GB-A- 2 438 211
- JP-A- H11 229 824

## Beschreibung

Die vorliegende Erfindung betrifft einen Mehrfachnocken für eine gebaute Nockenwelle einer Brennkraftmaschine. Die Erfindung betrifft außerdem ein Verfahren zum Herstellen eines derartigen Mehrfachnockens.
In der Regel werden Mehrfachnocken für schaltbare Nockenfolger eingesetzt, wobei in einer ersten Schaltstufe ein erstes Nockenprofil des Mehrfachnockens und in der zweiten Schaltstufe ein zweites Nockenprofil abgegriffen wird. Bekannte Mehrfachnocken sind dabei üblicherweise für einen Rollabgriff oder einen Gleitabgriff ausgebildet und vergleichsweise aufwändig und teuer herzustellen.
Die vorliegende Erfindung beschäftigt sich mit dem Problem, für einen Mehrfachnocken eine verbesserte Ausführungsform anzugeben, die sich insbesondere durch eine erhöhte Funktionalität und durch eine wirtschaftliche Herstellungsweise auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf einen an sich bekannten Mehrfachnocken, wobei an diesem Mehrfachnocken sowohl ein Gleitabgriff als auch ein Rollabgriff, das heißt also ein Mischabgriff, möglich ist. Der erfindungsgemäße Mehrfachnocken für eine gebaute Nockenwelle einer Brennkraftmaschine weist somit zumindest zwei Nockenprofile auf, von welchem ein erstes Nockenprofil für den Gleitabgriff und zumindest ein zweites Nockenprofil für den Rollabgriff ausgebildet sind. Dadurch lässt sich ein Mischabgriff realisieren, wobei die einzelnen Nockenprofile unterschiedlich auf den jeweiligen Gleit- oder Rollabgriff vorbereitet sind.

Das Dokument DE102007043169 A1 offenbart, ebenso wie die Dokumente DE10311358 A1 und JP11-229824, eine Nockenwelle mit Mehrfachnocken. Zweckmäßig ist das erste Nockenprofil beschichtet, insbesondere mittels einer DLC-Beschichtung (Diamond-like-carbon). DLC-Beschichtungen weisen eine große Härte und einen vergleichsweise hohen Verschleißwiderstand sowie eine geringe Reibung auf und sind dadurch insbesondere für den Gleitabgriff im Bereich einer Nockenwelle besonders geeignet. DLC-Beschichtungen sind üblicherweise Kohlenstoffbeschichtungen mit herausragenden verschleiß-, reibungs- und korrosionsmindernden Eigenschaften. Um nun eine derartige DLC-Beschichtung oder generell eine andere Beschichtung möglichst wirtschaftlich auf den erfindungsgemäßen Mehrfachnocken aufbringen zu können, wird dieser nach dem Schmieden bzw. Gießen zunächst mechanisch, beispielsweise spanend, nachbearbeitet und anschließend in eine maskenartige Stapeleinrichtung eingelegt, wobei die maskenartige Stapeleinrichtung die jeweiligen zweiten Nockenprofile der Mehrfachnocken abdeckt und lediglich das jeweilige erste Nockenprofil frei lässt. Durch die Stapeleinrichtung erfolgt somit eine Maskierung der einzelnen Mehrfachnocken. Anschließend werden die Mehrfachnocken in der Stapeleinrichtung an ihrem jeweils ersten Nockenprofil beschichtet, beispielsweise sogar simultan, wobei die Maskierung der Stapeleinrichtung verhindert, dass diese Beschichtung auch auf dem zweiten Nockenprofil aufgebracht wird. Hierdurch lässt sich der erfindungsgemäße Mehrfachnocken vergleichsweise wirtschaftlich beschichten und damit herstellen. Zweckmäßig weist der erfindungsgemäße Mehrfachnocken im Bereich des ersten Nockenprofils ein anderes metallisches Gefüge auf als im Bereich des zweiten Nockenprofils. Beim Gießen eines derartigen Mehrfachnockens kann dabei beispielsweise ein Abschreckeisen in eine Gießform, beispielsweise eine Sandform, eingelegt werden, welches das erste Nockenprofil des Mehrfachnockens kontaktiert und dadurch den Mehrfachnocken in diesem Bereich schnell abkühlt und damit härtet. Durch diese während des Gießens eintretende Härtung des erfindungsgemäßen Mehrfachnockens im Bereich des ersten Nockenprofils ist dieser dort für einen Gleitabgriff bereits vorbereitet. Der erfindungsgemäße Mehrfachnocken trägt im Bereich des zweiten Nockenprofils ein Stahlprofil. Im Bereich des zweiten Nockenprofils erfolgt üblicherweise ein Rollabgriff, der hinsichtlich einer Verschleißbeanspruchung deutlich geringer einzustufen ist als ein Gleitabgriff. Durch das im Bereich der zweiten Nockenprofile vorgesehene Stahlprofil lässt sich der Mehrfachnocken in diesem Bereich einfach auf einen Rollabgriff vorbereiten. Das Stahlprofil kann dabei thermisch mit dem Mehrfachnocken gefügt oder mechanisch auf diesen aufgepresst sein, wobei alternativ auch vorstellbar ist, dass das jeweilige Stahlprofil in eine Gussform des Mehrfachnockens eingelegt und in diesen eingegossen wird. Bei beiden alternativen Ausführungsformen kann der Mehrfachnocken, insbesondere auch hinsichtlich der Ausrichtung der einzelnen Nockenprofile mit höchster Qualität hergestellt werden.
Zweckmäßig sind zumindest zwei Mehrfachnocken über eine Schweißverbindung miteinander verbunden. Einzelne vorgefertigte Mehrfachnocken können somit zu Nockenpaketen zusammengefügt werden und beispielsweise über eine Reibschweißverbindung miteinander verbunden werden. Anschließend wird ein derartiges Nockenpaket als Ganzes auf die zugehörige Nockenwelle aufgeschoben, beispielsweise aufgepresst. Vor dem miteinander Verschweißen müssen die einzelnen Mehrfachnocken selbstverständlich hinsichtlich ihrer Winkellage relativ zueinander ausgerichtet werden.

Bei einer weiteren vorteilhaften Ausführungsform der erfindungsgemäßen Lösung können die Mehrfachnocken im Bereich ihrer zweiten Nockenprofile geschliffen sein, um insbesondere einen Rollabgriff besonders leichtgängig zu ermöglichen. Das Schleifen in diesem Bereich ermöglicht eine kontinuierliche und ruhige Nockenfolge, was wiederum für einen einwandfreien Betrieb der Brennkraftmaschine von Vorteil ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: einen erfindungsgemäßen Mehrfachnocken in einer Gussform,
- Fig. 2: mehrere Mehrfachnocken in einer maskierenden Stapeleinrichtung,
- Fig. 3: eine weitere Ausführungsform eines erfindungsgemäßen Mehrfachnockens auf einer Nockenwelle,
- Fig. 4: eine Darstellung wie in Fig. 3, jedoch ohne Nockenwelle,
- Fig. 5: ein erfindungsgemäßer Mehrfachnocken mit eingegossenen Stahlprofilen,
- Fig. 6: ein erfindungsgemäßer Mehrfachnocken mit aufgepressten bzw. thermisch gefügten Stahlprofilen,
- Fig. 7: eine Schnittdarstellung durch eine Nockenwelle mit einem erfindungsgemäßen Mehrfachnocken,
- Fig. 8: eine Darstellung wie in Fig. 7, jedoch bei einer verstellbaren Nockenwelle,
- Fig. 9: ein axial auf einer Nockenwelle verschiebbarer Mehrfachnocken.

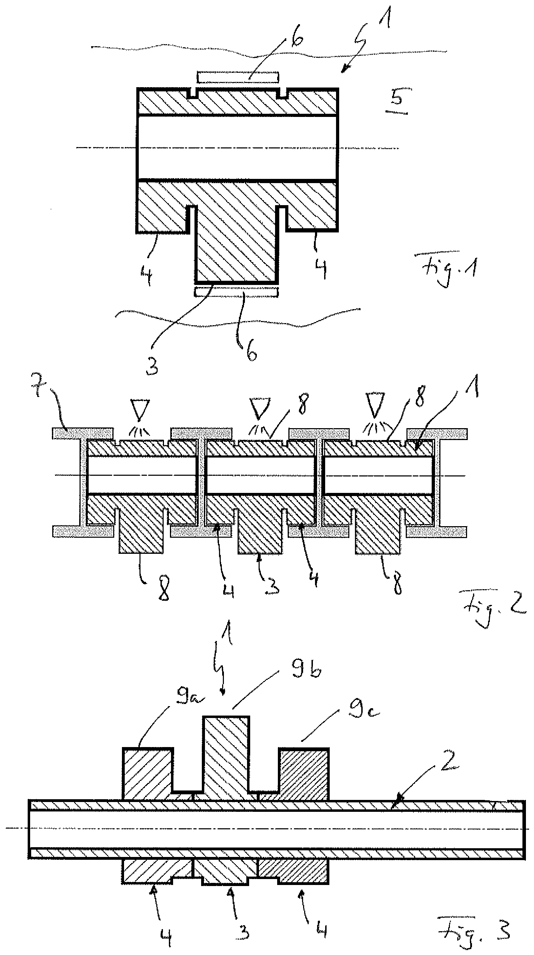

Entsprechend der Figur 1, weist ein erfindungsgemäßer Mehrfachnocken 1 für eine gebaute Nockenwelle 2 einer im Übrigen nicht gezeigten Brennkraftmaschine zumindest zwei Nockenprofile 3 und 4 auf. Das erste Nockenprofil 3 ist dabei für einen Gleitabgriff ausgebildet, wogegen das zweite Nockenprofil 4 für einen Rollabgriff ausgebildet ist, so dass der erfindungsgemäße Mehrfachnocken 1 für einen Mischabgriff (Gleit- und Rollabgriff) geeignet ist. Um dabei den individuellen Belastungen im Bereich des ersten Nockenprofils 3 und des zweiten Nockenprofils 4 gerecht zu werden, werden im Folgenden mehrere Herstellungsverfahren vorgestellt, die eine wirtschaftliche Herstellung des erfindungsgemäßen Mehrfachnockens 1 mit unterschiedlichen Nockenprofilen 3, 4 erlauben.

Gemäß der Figur 1 ist der Mehrfachnocken 1 beispielsweise als Gussteil ausgebildet und wird in einer entsprechenden Gussform 5, beispielsweise einer Sandform, gegossen. Um dabei das erste Nockenprofil 3 härter ausbilden zu können als die beiden zweiten Nockenprofile 4, wird im Bereich des ersten Nockenprofils 3 in der Gussform 5 ein Abschreckeisen 6 angeordnet, welches ein schnelleres Abkühlen und damit ein Härten des Mehrfachnockens 1 im Bereich des ersten Nockenprofils 3 während des Gießens ermöglicht. Das derart gehärtete erste Nockenprofil 3 ist aufgrund seiner Carbid enthaltenden Struktur in der Lage, einen Gleitabgriff langfristig zu bewältigen, ohne dass der Mehrfachnocken 1 im Bereich des ersten Nockenprofils 3 nachbearbeitet werden müsste. Als Material für einen derartig gegossenen Mehrfachnocken 1 kommt insbesondere Schalenhartguss in Betracht, bei welchem durch die Zusammensetzung und gießtechnische Maßnahmen erreicht wird, dass der Kohlenstoff bei der Erstarrung in einem äußeren Bereich als Eisencarbid mit den Eisenatomen verbunden bleibt, während er sonst als Graphit - zumeist in Form von Lamellen oder Kugeln - in das Eisengefüge ausgeschieden wird. Durch den unmittelbaren Kontakt des Schalenhartgussmaterials mit dem Abschreckeisen 6 findet eine schnelle Abkühlung statt, welche die Graphitausscheidung verhindert. Nach Bildung einer Schale wird die Geschwindigkeit der weiteren Erstarrung im Kern so weit begrenzt, dass hier die Graphitausscheidung erfolgen kann. Mit dem Schalenhartguss wird somit ein Gussteil erzeugt, das aus zwei völlig verschiedenen Werkstoffen besteht, wobei die Schale hart und verschleißbeständig ist, während der Kern die gute Verspanbarkeit von Grauguss aufweist. Dazwischen besteht eine mehr oder weniger starke Übergangszone. Das Härten bzw. die Schalenbildung findet hierbei nicht nur im Bereich des ersten Nockenprofils 3, sondern in abgeschwächter Form auch im Bereich des zweiten Nockenprofils 4 statt, wobei hier die Abkühlgeschwindigkeit aufgrund der Gussform 5, beispielsweise der Sandform, im Vergleich zum Abschreckeisen 6 im Bereich des ersten Nockenprofils 3 reduziert ist.

Im Bereich der zweiten Nockenprofile 4 kann der Mehrfachnocken 1 beispielsweise geschliffen und anschließend induktiv gehärtet werden, wodurch Martensit entsteht. Demgegenüber bildet sich im Bereich des ersten Nockenprofils 3 durch den Schalenhartguss ein ledeburitisches Gefüge, was durch das schnelle Abkühlen des Schalenhartgusses mittels des Abschreckeisens 6 aus der flüssigen Phase erzeugt wird. Ledeburit könnte auch nachträglich hergestellt werden, indem der jeweilige Bereich bis zur flüssigen Phase aufgeschmolzen und aus dieser anschließend schnell abgeschreckt wird. Im Unterschied zum martensitischen Gefüge ist somit bei der Bildung von Ledeburit lediglich die Ausgangstemperatur, aus welcher abgeschreckt wird, höher. Der Mehrfachnocken 1 besitzt somit im Bereich des ersten Nockenprofils 3 ein anderes, nämlich ein härteres, metallisches Gefüge, als im Bereich des zweiten Nockenprofils 4. Die Bezugszeichen 1 bis 4 gelten dabei für die Figuren 2 bis 9 analog.

Generell kann der Mehrfachnocken 1 aus einem Stück gefertigt sein, beispielsweise aus Vollmaterial und mittels eines Schmiedeverfahrens hergestellt werden, woraufhin der Mehrfachnocken 1 anschließend mechanisch, insbesondere spanend, bearbeitet wird. Da in diesem Fall der Mehrfachnocken 1 sowohl am ersten als auch am zweiten Nockenprofil 3, 4 dieselben Eigenschaften aufweist, kann der Bereich des ersten Nockenprofils 3 zusätzlich bearbeitet, beispielsweise beschichtet werden, wobei als Beschichtung 8 eine DLC-Beschichtung oder ein Nitrieren vorgesehen werden kann. Um dies wirtschaftlich darstellen zu können, können mehrere Mehrfachnocken 1 in eine Stapeleinrichtung 7 (vergleiche Figur 2) eingelegt werden, die zugleich eine Maske bildet und die jeweils zweiten Nockenprofile 4 des Mehrfachnockens 1 abdeckt, so dass ausschließlich ein Beschichten des ersten Nockenprofils 3 erfolgt. Das Nitrieren ist dabei ein bekanntes Verfahren zur Oberflächenhärtung unter Verwendung von Stickstoff. DLC-Beschichtungen sind Kohlenstoffschichten mit hoher Härte und hohem Verschleißwiderstand und lassen sich durch spezielle chemische Gasabscheideverfahren herstellen, bei welchem mikro- oder nanokristalline Schichten entstehen, die einen äußerst geringen Reibbeiwert besitzen und dadurch für einen Gleitabgriff besonders geeignet sind.

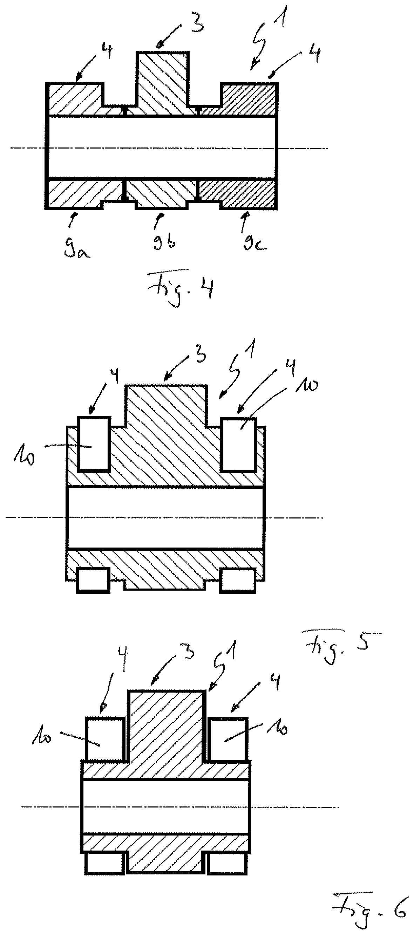

Betrachtet man die Figuren 3 und 4, so kann man erkennen, dass der erfindungsgemäße Mehrfachnocken 1 auch aus mehreren einzelnen Nockenteilen 9a, 9b und 9c zusammengesetzt sein kann. Die einzelnen Nockenteile 9a, 9b und 9c können dabei miteinander verschweißt, beispielsweise über eine Reibschweißverbindung oder einen Laserschweißprozess miteinander verbunden werden. Hierdurch ist insbesondere auch die Möglichkeit gegeben, unterschiedlichste Materialien miteinander zu paaren, beispielsweise beschichtete Nockenteile mit unbeschichteten Nockenteilen oder Nockenteilen mit unterschiedlichem Gefüge bzw. Härten. Eine Verbindung mit der Nockenwelle 2 erfolgt beispielsweise über ein thermisches Fügen oder über einen Presssitz, das heißt sie werden auf die Nockenwelle 2 aufgepresst.

Generell kann der Mehrfachnocken 1 auch durch zumindest zwei Nockenteile 9, 9a, 9b, 9c gebildet sein, indem die einzelnen Nockenteile 9, 9a, 9b, 9c beispielsweise miteinander versschweißt werden. Zumindest eines der Nockenteile 9, 9a, 9b, 9c kann dabei gesintert oder mittels eines Sinterprozesses hergestellt sein. Durch das Sintern können insbesondere die Härte und die Festigkeit gesteigert werden.

Gemäß der Figur 5 ist ein erfindungsgemäßer Mehrfachnocken 1 gezeigt, der im Bereich des zweiten Nockenprofils 4 ein Stahlprofil 10 trägt. Das Stahlprofil 10 ist dabei in dem Mehrfachnocken 1 eingegossen und somit unlösbar mit diesem verbunden. Ein derartiges Stahlprofil 10 erübrigt eine Nachbearbeitung des erfindungsgemäßen Mehrfachnockens 1 im Bereich des zweiten Nockenprofils 4. Eine ähnliche Ausführungsform des erfindungsgemäßen Mehrfachnockens 1 zeigt die Figur 6, wobei hier das Stahlprofil 10 im Bereich des zweiten Nockenprofils 4 thermisch mit dem Mehrfachnocken 1 gefügt oder auf diesen aufgepresst ist.

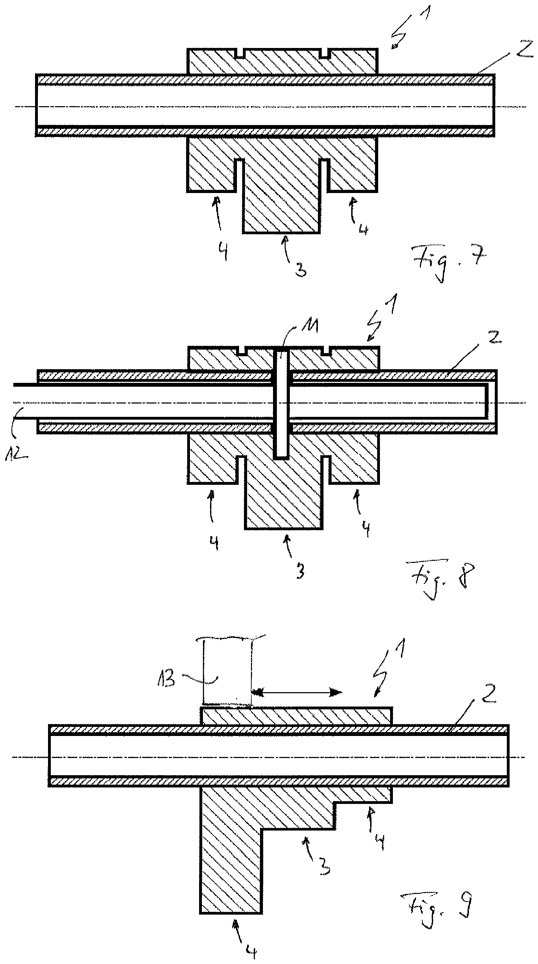

Der erfindungsgemäße Mehrfachnocken 1 kann dabei mit einer herkömmlichen Nockenwelle 2 in bekannter Weise gefügt werden, wie dies beispielsweise gemäß der Figur 7 dargestellt ist, wobei auch ein Einsatz bei einer verstellbaren Nockenwelle 2 denkbar ist, wie dies gemäß der Figur 8 dargestellt ist. In diesem Fall ist der Mehrfachnocken 1 über einen Stift 11 mit einer Innenwelle 12 der Nockenwelle 2 verstiftet. Auch ist eine Ausführungsform des erfindungsgemäßen Mehrfachnockens 1 als translatorisch auf der Nockenwelle 2 verstellbar gelagerter Nocken denkbar (vgl. Fig. 9), wobei hier ein Nockenfolger 13 durch ein axiales Verschieben des Mehrfachnockens 1 entlang der Nockenwelle 2 sämtliche Nockenprofile 3, 4 abgreifen kann. Eine Herstellung des Mehrfachnockens 1 gemäß der Figur 9 ist dabei analog zu dem gemäß den Figuren 1 und 2 gezeigten Verfahren denkbar.

Mit dem erfindungsgemäßen Mehrfachnocken 1 kann ein verschleißresistenter und wirtschaftlich herzustellender Mehrfachnocken 1 angeboten werden, der in unterschiedlichsten Ausführungsformen von Nockenwellen 2 einsetzbar ist und der erstmals einen Mischabgriff ermöglicht.

## Patentansprüche

1. Mehrfachnocken (1) für eine gebaute Nockenwelle (2) einer Brennkraftmaschine mit zumindest zwei Nockenprofilen (3,4), bei dem zumindest ein erstes Nockenprofil (3) für einen Gleitabgriff und zumindest ein zweites Nockenprofil (4) für einen Rollabgriff ausgebildet ist **dadurch gekennzeichnet,**
**dass** der Mehrfachnocken (1) im Bereich des zweiten Nockenprofils (4) ein Stahlprofil (10) trägt, das in den Mehrfachnocken (1) eingegossen ist.

2. Mehrfachnocken nach Anspruch 1,
**dadurch gekennzeichnet,**
**dass** das erste Nockenprofil (3) eine Beschichtung (8) aufweist, insbesondere eine DLC-Beschichtung, oder nitriert ist.

3. Mehrfachnocken nach Anspruch 1,
**dadurch gekennzeichnet,**
**dass** der Mehrfachnocken (1) im Bereich des ersten Nockenprofils (3) ein anderes metallisches Gefüge aufweist, als im Bereich des zweiten Nockenprofils (4).

4. Mehrfachnocken nach Anspruch 3,
**dadurch gekennzeichnet,**
**dass** der Mehrfachnocken (1) im Bereich des ersten Nockenprofils (3) gehärtet ist.

5. Mehrfachnocken nach Anspruch 4,
**dadurch gekennzeichnet,**
**dass** der Mehrfachnocken (1) als Gussteil ausgebildet ist, wobei das metallische Gefüge im Bereich des ersten Nockenprofils (3) mittels eines Abschreckeisens (6) während des Gießens gehärtet ist.

6. Mehrfachnocken nach einem der vorhergehenden Ansprüche,
**dadurch gekennzeichnet,**
**dass** der Mehrfachnocken (1) im Bereich des zweiten Nockenprofils (4) geschliffen ist.

7. Mehrfachnocken nach einem der vorhergehenden Ansprüche,
**dadurch gekennzeichnet,**
- **dass** zumindest zwei Mehrfachnocken (1) oder mehrere Nockenteile (9, 9a, 9b, 9c) über eine Schweißverbindung miteinander verbunden sind, und/oder
- **dass** zumindest zwei Nockenteile (9, 9a, 9b, 9c) zu einem Mehrfachnocken (1) miteinander verbunden sind.

8. Mehrfachnocken nach Anspruch 7,
**dadurch gekennzeichnet,**
**dass** zumindest eines der Nockenteile (9, 9a, 9b, 9c) gesintert oder mittels eines Sinterprozesses hergestellt ist.

## Claims

1. Multiple cam (1) for an assembled camshaft (2) of an internal combustion engine having at least two cam profiles (3, 4) in which at least a first cam profile (3) for sliding actuation and at least a second cam profile (4) for rolling actuation is constructed, **characterised in that**
the multiple cam (1) carries in the region of the second cam profile (4) a steel profile (10) which is cast in the multiple cam (1).

2. Multiple cam according to claim 1
**characterised in that**
the first cam profile (3) has a coating (8), in particular a DLC coating, or is nitrided.

3. Multiple cam according to claim 1,
**characterised in that**
the multiple cam (1) in the region of the first cam profile (3) has a different metal structure from that in the region of the second cam profile (4).

4. Multiple cam according to claim 3,
**characterised in that**
the multiple cam (1) is hardened in the region of the first cam profile (3).

5. Multiple cam according to claim 4,
**characterised in that**
the multiple cam (1) is constructed as a cast component, wherein the metal structure in the region of the first cam profile (3) is hardened by means of a quenching iron (6) during the casting.

6. Multiple cam according to any one of the preceding claims,
**characterised in that**
the multiple cam (1) is ground in the region of the second cam profile (4).

7. Multiple cam according to any ane of the preceding claims,
**characterised in that**
- at least two multiple cams (1) or a plurality of cam portions (9, 9a, 9b, 9c) are connected to each other via a weld connection,
and/or
- **in that** at least two cam portions (9, 9a, 9b, 9c) are connected to each other to form a multiple cam (1).

8. Multiple cam according to claim 7,
**characterised in that**
at least one of the cam portions (9, 9a, 9b, 9c) is sintered or produced by means of a sintering process.

## Revendications

1. Came multiple (1) pour un arbre à cames (2) assemblé d'un moteur à combustion interne avec au moins deux profils de came (3, 4), dans laquelle au moins un premier profil de came (3) est réalisé pour un actionnement coulissant et au moins un second profil de came (4) est réalisé pour un actionnement roulant,
**caractérisée en ce que**,
la came multiple (1) porte dans la zone du second profil de came (4) un profil en acier (10), qui est coulé dans la came multiple (1).

2. Came multiple selon la revendication 1,
**caractérisée en ce que**,
le premier profil de came (3) présente un revêtement (8), en particulier un revêtement DLC, ou est nitruré.

3. Came multiple selon la revendication 1,
**caractérisée en ce que**,
la came multiple (1) présente dans la zone du premier profil de came (3) une autre structure métallique que dans la zone du second profil de came (4).

4. Came multiple selon la revendication 3,
**caractérisée en ce que**,
la came multiple (1) est durcie dans la zone du premier profil de came (3).

5. Came multiple selon la revendication 4,
**caractérisée en ce que**,
la came multiple (1) est réalisée comme partie moulée, dans laquelle la structure métallique est durcie dans la zone du premier profil de came (3) au moyen d'un fer trempé (6) pendant le coulage.

6. Came multiple selon l'une quelconque des revendications précédentes, **caractérisée en ce que**,
la came multiple (1) est rectifiée dans la zone du second profil de came (4).

7. Came multiple selon l'une quelconque des revendications précédentes, **caractérisée en ce que**,
- au moins deux cames multiples (1) ou plusieurs parties de came (9, 9a, 9b, 9c) sont raccordées entre elles par une liaison soudée,
et/ou
- au moins deux parties de came (9, 9a, 9b, 9c) sont raccordées entre elles pour former une came multiple (1).

8. Came multiple selon la revendication 7,
**caractérisée en ce que**,
au moins une des parties de came (9, 9a, 9b, 9c) est fritée ou fabriquée au moyen d'un processus de frittage.
